# EUROPEAN PATENT APPLICATION

(11) **EP 4 570 663 A1**
(43) Date of publication of application: **18.06.2025**
(21) Application number: 23216716.3
(22) Date of filing: 14.12.2023
(51) Int. Cl.: B64D 13/06

(54) **CABIN AIR OUTLET WITH IMPROVED FLOW CHARACTERISTIC**

(71) Applicant: Airbus Operations GmbH, 21129 Hamburg (DE)
(72) Inventor: Lohmar, Jens, 21129 Hamburg (DE)
(74) Representative: Schornack, Oliver

(57) **Abstract**

The present disclosure relates to a cabin air ventilation system (100) for an aircraft cabin (10) comprising a riser duct (50) configured to conduct fresh air to the aircraft cabin, and an air outlet (101, 102) connected to the riser duct (50). The air outlet comprises air stream forming means generating an air stream (162) in the form of a circular sector or ring segment after leaving the air outlet.

## Description

The present disclosure generally relates to a cabin air ventilation system, an aircraft section having such ventilation system between frames, and a corresponding aircraft. Particularly, the present disclosure relates to a cabin air ventilation system having an air outlet generating an air stream in the form of a ring segment. The present disclosure further relates to an aircraft section with such a cabin air ventilation system, and a corresponding aircraft having such ventilation system and/or aircraft section.

A conventional aircraft is equipped with an air ventilation system that provides general air supply into an aircraft cabin, such as a lateral air outlet (LAO) and a ceiling air outlet (CAO), as well as individual nozzles in a personal service unit (PSU). While the personal service units (PSU) are arranged above and in association with the seat rows in the aircraft, the LAO and CAO respectively provide an air supply in a lateral region of the aircraft cabin, e.g., above the windows in a region of overhead storage compartments, and in a ceiling region of the aircraft cabin.

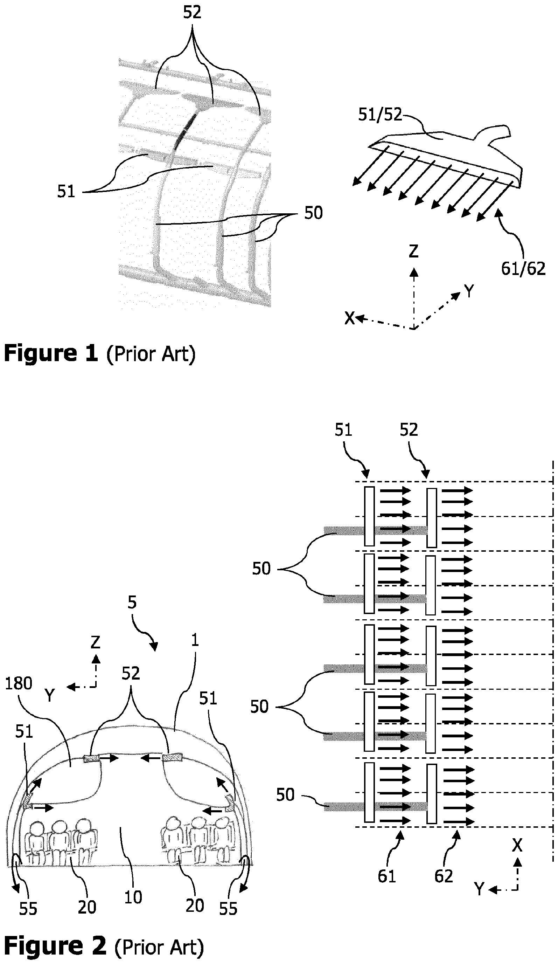

Figure 1 schematically illustrates a portion of a conventional ventilation system comprising riser ducts 50 (for example connected to a main air supply duct in a floor region). Such riser ducts 50 can be arranged between an outer skin of the aircraft and an inner lining of the aircraft cabin. Thus, the riser ducts 50 are arranged in the vicinity of and/or parallel to a frame of the primary structure (not illustrated) of the aircraft. Connected to such riser ducts 50 are lateral air outlets, LAO 51 and ceiling air outlets, CAO 52. Usually, one LAO 51 and one CAO 52 are fluidly coupled to the same riser duct 50.

As illustrated in the detailed drawing of Figure 1, each of the LAO 51 and CAO 52 are configured to generate a straight stream 61, 62 of air supplied by the riser duct 50. With further reference to Figure 2 schematically illustrating portions of a conventional ventilation system, by arranging a plurality of LAOs 51 and CAOs 52 next to one another in a longitudinal direction of the aircraft (X-axis) the straight air stream 61, 62 (streaming along the Y-axis and usually following a path in Y- and Z- axis direction) is provided along the entire aircraft (i.e., in an X-Y-plane). For instance, a width of each LAO 51 and CAO 52 can be substantially the same as the distance between two adjacent riser ducts 50 (viewing in the X-axis (longitudinal) direction), so that adjacent LAOs 51 and adjacent CAOs 52 can abut against one another or are at least very close to one another. Thus, the entire aircraft cabin can be supplied with fresh air, which will stream from the lateral side of the aircraft cabin and the ceiling region to a centre of the aircraft cabin. Since usually air is removed from the aircraft cabin at so-called Dado-panels 55 arranged at a sidewall and/or floor of the aircraft cabin 10, the air supply circulates through the aircraft cabin 10 substantially in a cross-sectional plane (Y-Z-plane).

It is an object of the present disclosure to provide a simplified and lightweight air ventilation system.

This object is solved by the present invention as defined in the independent claims. Preferred embodiments are defined by the dependent claims.

According to a first aspect to better understand the present disclosure, a cabin air ventilation system comprises a riser duct arranged along a lateral side of the aircraft cabin and configured to conduct fresh air to the aircraft cabin, and an air outlet connected to an upper end of the riser duct and distributing the conducted air from the riser duct in an area associated with the riser duct.

Besides such rather conventional combination of riser duct and air outlet, the air outlet of the present disclosure comprises air stream forming means generating an air stream in the form of a circular sector or ring segment after leaving the air outlet.

In other words, the air stream generated by the air stream forming means, i.e. leaving the air outlet deviates from a straight air stream as in conventional air outlets. Instead of flowing/streaming straight in the Y-axis direction, the air stream covers an area of increasing width, i.e., becoming larger in X-axis direction with increasing distance from the air outlet. Thus, the air stream can mix with other air streams or non-moving air in the aircraft cabin, resulting in a better ventilation of the aircraft cabin. Due to the mixing of air, a size of the air outlet and/or a number of air outlets in the aircraft cabin can be reduced, so that the weight of the ventilation system can be reduced.

It is to be understood that the air stream will have the shape of a circular sector, when contemplating an inlet of the air outlet as the centre of the circle. As the actual opening of the air outlet, where the air stream is released, has a particular width, the shape of the air stream downstream of the air outlet can be considered as a ring segment, wherein the inner circular arc of the ring segment is formed by the opening of the air outlet.

It is further to be understood that "fresh air" conducted to the aircraft cabin can include or be recirculated air, i.e. a mixture of air taken from the ambient environment of the aircraft and air removed from the aircraft cabin.

In an implementation variant, the air stream forming means can comprise a funnel shaped main body. The main body having a funnel-shaped is dimensioned, so that the actual opening of the air outlet is larger than an inlet. This allows the air stream from the riser duct to enlarge, particularly in a width direction (X-axis direction), before leaving the opening of the air outlet. This enlarging or expanding of the air stream will continue after leaving the air outlet, leading to the air stream shape of a circular sector or ring segment.

Alternatively or additionally, the air stream forming means can comprise a curved outlet forming the basis of the ring segment of the air stream. In other words, the opening of the air outlet can be curved, in accordance with the inner circular art of the ring segment formed by the air stream downstream of the air outlet.

Further alternatively or additionally, the air stream forming means can comprise a plurality of vanes, wherein at least some of the plurality of vanes are oriented in different directions. As a mere example, at least some of the plurality of vanes may be arranged on a circular arc, e.g., point towards a common centre.

In the present disclosure a reference to a circle, circular arc, ring or the like, is to be understood as having a curved form that may deviate from a circle. As a mere example, a section of an ellipse or other curvature is to be understood as interchangeable with circle, circular art, ring or the like.

In an implementation variant, the air outlet can be a lateral air outlet or a ceiling air outlet. A lateral air outlet (LAO) is usually arranged somewhere at a sidewall of the aircraft cabin above a floor and below a ceiling of the aircraft cabin. A ceiling air outlet (CAO) is usually arranged in a crown area of the aircraft cabin, i.e. at a ceiling of the aircraft cabin. Since the cross-sectional shape of the aircraft cabin (of the aircraft) is more or less circular, a distinction between LAO and CAO can be made, as the LAO is arranged at approximately 30° to 70° above the floor, preferably at approximately 45° to 65° above the floor, while the CAO is arranged at approximately 60° to 85° above the floor, preferably at approximately 70° to 80° above the floor. As a mere example, such distinction between LAO and CAO can also be based on a location relative to a hatrack /stowage bin (also referred to as an overhead stowage compartment). For instance, the LAO can be located outbound and below the stowage bin, the CAO can be located above it.

In an implementation variant, the cabin air ventilation system can further comprise at least one additional air outlet arranged adjacent to and spaced apart from the air outlet, wherein the at least one additional air outlet comprises air stream forming means generating an air stream in the form of a circular sector or ring segment after leaving the air outlet. In other words, the additional air outlet can be formed in the same manner as the previously described air outlet, including one or more of the disclosed implementation variants.

In an implementation variant, the circular sector or ring segment associated with the air outlet can overlap in part with the circular sector or ring segment associated with the additional air outlet. Thus, the air streams of both air outlets overlap and mix with one another. This allows increasing a distance between both air outlets compared to a conventional cabin air ventilation system.

According to a second aspect to better understand the present disclosure, an aircraft section comprises a plurality of frames arranged in a plane perpendicular to a longitudinal direction of the aircraft section, and regularly spaced apart from one another by a first distance. Furthermore, the aircraft section comprises a cabin air ventilation system of the first aspect or one or more of its variants.

In an implementation variant, a second distance between the air outlet and the additional air outlet of the cabin air ventilation system can be at least the first distance between two immediately adjacent frames of the plurality of frames. Immediately adjacent frames is to be understood as two frames in juxtaposition with each other, i.e., that no further frame is arranged therebetween.

The second distance is to be understood as a distance between the respective outer edges or corners of the respective air outlet. As a mere example, the air outlet and the additional air outlet are not abutting against one another or are in close proximity, but a larger gap is between both air outlets. Since the size of this gap is at least the distance between two adjacent frames, at least the size of each air outlet is significantly smaller than in conventional air ventilation systems, where the edges or corners of two adjacent air outlet abut against one another or are in close proximity. If the second distance is even much larger than the first distance, the number of air outlets in the aircraft section can be reduced compared to a conventional air ventilation system.

Furthermore, since there is a gap between two adjacent air outlets, no air stream is generated in this region along the X-axis direction (longitudinal direction of the aircraft section. However, due to the enlarging shape of the air stream, the air streams of both air outlets will come into contact and mix with one another, so that sufficient air circulation and the aircraft section can be provided with a reduced weight of the ventilation system, particularly the air outlets.

In an implementation variant, the at least one additional air outlet can comprise a plurality of air outlets, and wherein, in the longitudinal direction of the aircraft section, all air outlets form a recurring sequence of a lateral air outlet followed by a ceiling air outlet. In other words, when viewing along the X-axis direction of the aircraft section, after a LAO follows a CAO, followed by a LAO, followed by a CAO, etc.. This further facilitates a good ventilation, since the beginning of each air stream is offset compared to a neighbouring air stream, particularly offset at a position along the circumferential direction of a frame.

In an implementation variant, each of all air outlets is coupled to one dedicated riser duct. Thus, the disclosed cabin air ventilation system can be retrofitted to an existing ventilation system, particularly to its riser ducts. Since the amount of air guided through each riser duct is not split into an LAO and a CAO as in conventional ventilation systems, the air stream generated at each air outlet can have an increased air speed compared to conventional systems. This further compensates for the omission of one outlet, and facilitates good ventilation of the aircraft section.

According to a third aspect to better understand the present disclosure, an aircraft comprises at least one cabin air ventilation system of the first aspect or one or more of its variants.

Alternatively or additionally, the aircraft can comprise at least one aircraft section of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a portion of a conventional ventilation system of an aircraft;
- Figure 2: schematically illustrates a conventional aircraft section in a cross-sectional view and a plan view;
- Figure 3: schematically illustrates a perspective view of a conventional ventilation system of an aircraft;
- Figure 4: schematically illustrates a perspective view of an exemplary aircraft section having a cabin air ventilation system, according to the present disclosure;
- Figures 5 and 6: schematically illustrate perspective views of further exemplary aircraft sections, each having a cabin air ventilation system, according to the present disclosure;
- Figure 7: schematically illustrates a plan view of the cabin air ventilation system of the aircraft section of Figure 6; and
- Figure 8: schematically illustrates a plan view of the cabin air ventilation system of the aircraft section of Figure 5.

In the following description, for purposes of explanation and not limitation, specific details are set forth in order to provide a thorough understanding of the present disclosure. It will be apparent to one skilled in the art that the present disclosure may be practiced in other implementations that depart from these specific details.

Figures 1 and 2 schematically illustrate a portion of a conventional ventilation system of an aircraft 1, and a conventional aircraft section 5 in a cross-sectional view and a plan view. Specifically, riser ducts 50 may have a lateral and/or ceiling air outlet 51, 52 connected thereto, so that air is distributed/vented in the aircraft section 5. For instance, a plurality of seat rows 20 may be provided in the aircraft section 5, wherein the air outlets 51, 52 are arranged above the seat rows 20 at a sidewall (in case of the lateral air outlet 51) and a ceiling (in case of ceiling air outlet 52). The riser ducts 50 may be provided behind a sidewall lining of the aircraft cabin 10, i.e., close to the aircraft outer skin (cf. Figure 2).

The conventional LAO 51 and CAO 52 as illustrated in Figure 1 provide a uniform air flow substantially perpendicularly from the outlet opening of the LAO 51 and CAO 52, i.e., in the Y-axis direction substantially perpendicular to the longitudinal direction (X-axis) of the aircraft 1. Such uniform and substantially perpendicular airflow is desired, as the width of each LAO 51 and CAO 52 is approximately as wide as the distance between two adjacent riser ducts 50. In other words, a continuous row of LAOs 51 and a continuous row of CAOs 52 are formed, which respectively provide a continuous air flow 61, 62 along the longitudinal direction of the aircraft 1 (the air flow flowing substantially perpendicular to the longitudinal direction).

In an area close to the floor and bottom of a sidewall there is usually a possibility of removing air from the aircraft cabin 10, such as a Dado-panel 55 at the bottom of each sidewall. Thus, the air streaming into the aircraft cabin through the LAO 51 and CAO 52 will form a circle or swirl in a cross-sectional plane (Y-Z-plane) of the aircraft cabin 10.

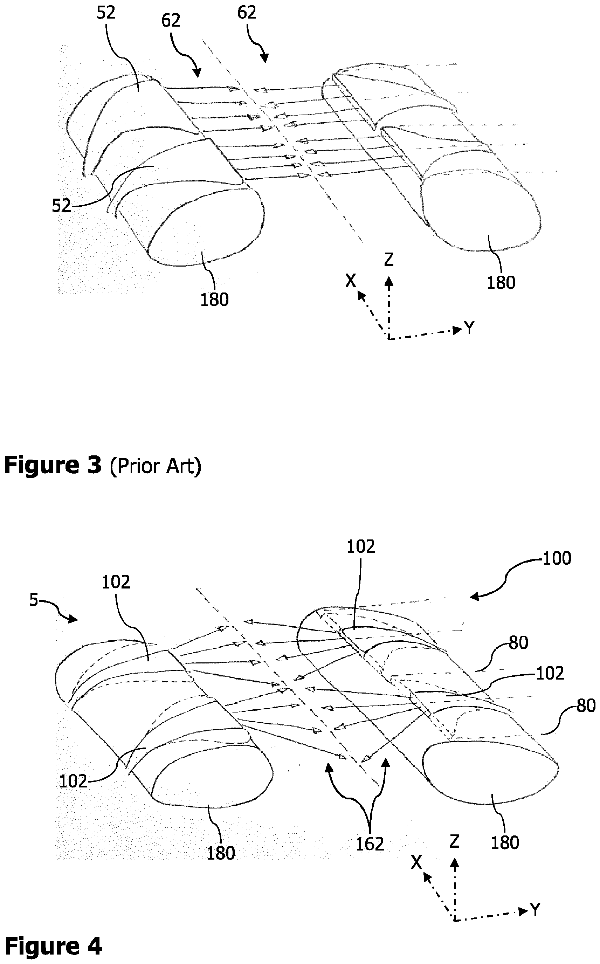

Figure 3 schematically illustrates a perspective view of a portion of a conventional ventilation system of an aircraft 1. For instance, Figure 3 illustrates CAOs 52, that can be arranged on top of overhead stowage compartments 180, which are usually arranged above seat rows 20. Thus, opposite air streams 62 can be generated by oppositely arranged CAOs 52. At the middle centre (illustrated by a dashed line) the air streams will collide and, since this is the crown area of the aircraft cabin 10, will stream downwards and towards the dado panels 55.

Furthermore, Figure 3 schematically illustrates (in dashed lines) above the overhead stowage compartments 180 on the right-hand side the location of frames of the aircraft primary structure. As can be derived from Figure 3, usually an air outlet 51, 52 has a width corresponding twice the distance between adjacent (neighbouring) frames.

Figure 4 schematically illustrates a perspective view of an exemplary aircraft section 5 having a cabin air ventilation system 100, according to the present disclosure. The cabin air ventilation system 100 comprises air outlets. Only ceiling air outlets CAOs 102 are illustrated. It is to be understood that LAOs may likewise be part of the cabin air ventilation system 100, but may be arranged underneath the overhead stowage compartments 180, so that they are not illustrated here for brevity reasons.

Figure 4 illustrates as dashed lines the location of conventional CAOs 52, such as those in Figure 3. As can be derived from Figure 4, the air outlet 102 of the present disclosure can be made much smaller (in a width direction). The air stream 162 generated by the air outlet has the form of a circular sector or ring segment after leaving the air outlet 102. This compensates for the reduced width of the air outlet 102, as the air streams 162 will spread along the X-axis direction and, hence, mix with one another. Thus, the air outlet 102 can be made much smaller and, hence, lightweight and easier to install.

Figure 4 also schematically illustrates in dashed lines the location of frames 80 as a comparison to the conventional system of Figure 3. The frames 80 are spaced apart from one another by a first distance (viewing along the longitudinal direction (X-axis direction)). A distance between two adjacent air outlets 102 in the longitudinal direction is at least the first distance between two immediately adjacent frames 80. The distance is to be understood as the gap or space between the outer housing or edges of the air outlets 102. As a mere example, in conventional ventilation systems, such as the one in Figure 3 and indicated by dashed lines in Figure 3, the distance between two adjacent air outlets is much smaller, or such conventional air outlet about against one another.

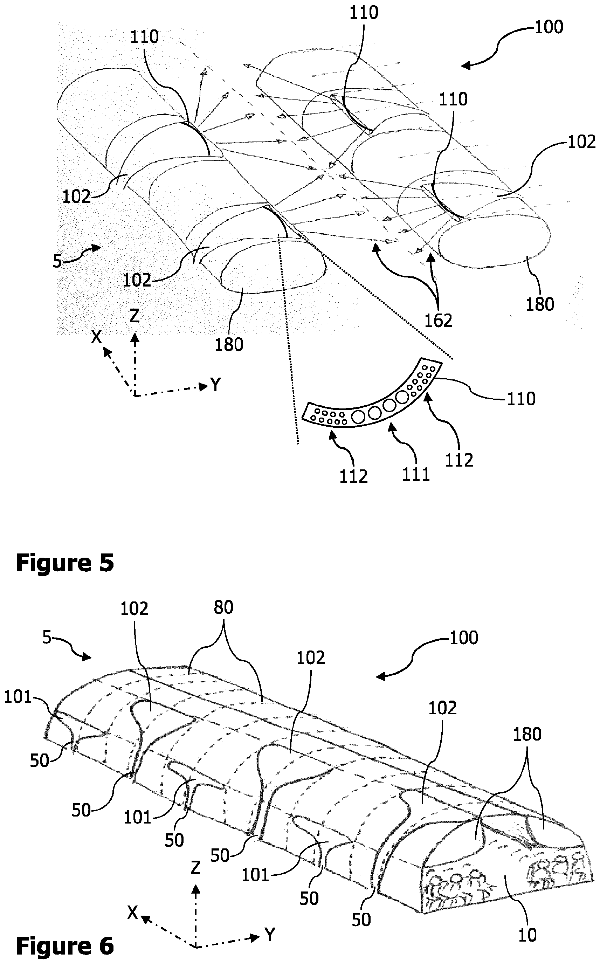

Figure 5 schematically illustrates a perspective view of another exemplary aircraft section 5 having a cabin air ventilation system 100, according to the present disclosure. While the air outlet 102 in Figure 4 has a substantially straight opening, the air outlet 102 of Figure 5 has a curved outlet 110 forming the basis of the ring segment of the air stream 162. This curved outlet 110 can be contemplated as an air stream forming means that generates the air stream 162 in the form of a circular sector or ring segment.

The detail of Figure 5 schematically illustrates the curved outlet 110 including additional or alternative air stream forming means. Specifically, a plurality of vanes 111, 112 can be provided in the air outlet 102, where at least some of the plurality of vanes are oriented in different directions. In addition, Figure 5 illustrates vanes of different size. As a mere example, vanes 111 of large diameter may be arranged in a centre of the opening of the air outlet 102, while vanes 112 of smaller diameter may be arranged in side regions of the air outlet 102. It is to be understood that the position of smaller and larger vanes 111, 112 is not restricted to the illustrated example. In addition to or alternatively to vanes, the air stream forming means can include nozzles oriented in different directions.

Figure 6 schematically illustrates a perspective view of a further exemplary aircraft section 5 having a cabin air ventilation system 100. The illustrated aircraft section 5 shows additional portions below the overhead stowage compartments 180 (compared to Figure 4 or 5), and, hence, the lateral air outlets 101. In this exemplary ventilation system 100, each outlet 101, 102 is coupled with one dedicated riser duct 50. Thus, opposed to a conventional system as the one illustrated in Figure 1, a riser duct 50 guides air to only one air outlet 101, 102, instead of two outlets 51, 52. This allows increasing a flow speed of the air leaving the air outlet 101, 102.

Furthermore, a recurring sequence of lateral air outlet 101 and ceiling air outlet 102 is provided in this exemplary cabin air ventilation system 100. This provides for a simplified ventilation system 100, as the number of outlets is reduced to one half of outlets of a conventional system.

In this particular exemplary ventilation system 100, each air outlet 101, 102 can even be formed as in a conventional system, such as an air outlet forming a straight air stream 61, 62 (see Figure 2). Since the number of air outlets 101, 102 is reduced by 50%, the weight of the entire ventilation system is reduced significantly.

Nevertheless, providing at least some of the air outlets 101, 102 with air stream forming means generating an air stream in the form of a circular sector or ring segment further facilitates ventilation by mixing the air streams throughout the aircraft cabin 10.

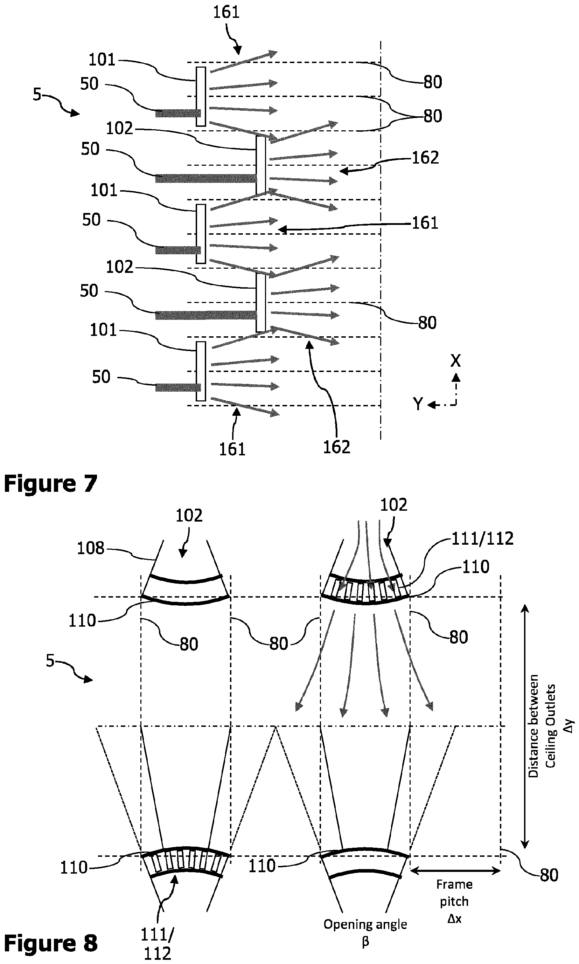

This is a further illustrated in Figure 7 showing a plan view of a cabin air ventilation system 100, in accordance with the arrangement of LAOs 101 and CAOs 102 as in Figure 6. The air streams 161, 162 generated by the respective air outlets 101, 102 will stream through the entire aircraft section 5 as in conventional ventilation systems, but with a significantly lighter ventilation system 100.

This may be achieved with air outlets 101, 102 having a width corresponding to the width of conventional air outlets 51, 52, as it is illustrated in Figure 7. In other words, the outer edges of the air outlets 101, 102 are close to one another or would even abut against one another, if arranged on one line. Due to the offset in cross-sectional direction (Y-axis direction), there is no possibility of abutting against one another.

Figure 8 schematically illustrates a plan view of the cabin air ventilation system 100 of the aircraft section 5 of Figure 5. This drawing shows different kinds of air stream forming means at once, although only one may be used or employed in the respective air outlets 101, 102. Specifically, the illustrated air outlets (here only CAOs 102) have a funnel-shaped main body 108, which widens towards an opening 110 of the air outlet 102. Thus, an air stream generated inside of the main body 108 already expands in a width-wise direction, so that the air stream 161, 162 having a shape/form of a circular sector or ring segment is achieved. The funnel-shaped main body 108 may have any desired opening angle β. The angle β may depend on the distance between two adjacent air outlets 101, 102, so that the air streams leaving the respective air outlet 101, 102 will come into contact with one another shortly after the opening 110 or at the latest in the centre of the space between oppositely arranged air outlets 101, 102 (illustrated as a dash dotted line in Figure 8.

Furthermore, a curved outlet 110 (or curved opening) may be provided with the air outlet 101, 102, which facilitates generation of the fan-shaped air stream 161, 162 (having a shape/form of a circular sector or ring segment is achieved).

Likewise, Figure 8 illustrates exemplary vanes 111, 112 (see also Figure 5), at least some of which are oriented in different directions. A vane 111, 112 includes at least one surface and guiding the air stream flowing through the main body 108 in a particular direction. Since at least some of the vanes 111, 112 point to (are oriented in) different directions, the air stream 161, 162 will also have portions being directed in different directions. Thus, the airstream 161, 162 in the form of a circular sector or ring segment after leaving the air outlet 101, 102 can be achieved in a cost-effective and easy way.

Figure 8 further illustrates the position of frames 80 in a schematic manner (and in dashed lines in this drawing). As can be derived, the size of the opening 110 can be similar to a frame pitch Δx, i.e., the distance between two immediately adjacent frames 80. This allows forming a gap between two adjacent air outlets 101, 102, so that a distance between the air outlets 101, 102 is at least the distance Δx between the two immediately adjacent frames. Thus, the weight of each outlet 101, 102 is reduced compared to conventional outlets 51, 52.

While the drawings illustrate the vanes 111, 112 as cylinders, through which the air can be guided, it is to be understood that any form of vane allowing to guide air can be provided. As mere examples, the vanes 111, 112 can be or can be formed by a baffle, a sheet having a wave-form, a cylinder, and/or a cuboid or the like.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A cabin air ventilation system (100) for an aircraft cabin (10), the air ventilation system comprising:
a riser duct (50) arranged along a lateral side of the aircraft cabin (10) and configured to conduct fresh air to the aircraft cabin (10); and
an air outlet (101, 102) connected to an upper end of the riser duct (50) and distributing the conducted air from the riser duct (50) in an area associated with the riser duct (50),
wherein the air outlet (101, 102) comprises air stream forming means (108, 110, 111, 112) generating an air stream (161, 162) in the form of a circular sector or ring segment after leaving the air outlet.

2. The cabin air ventilation system (100) of claim 1, wherein the air stream forming means (108, 110, 111, 112) comprises:
- a funnel shaped main body (108); and/or
- a curved outlet (110) forming the basis of the ring segment of the air stream (161, 162); and/or
- a plurality of vanes (111, 112), wherein at least some of the plurality of vanes are oriented in different directions.

3. The cabin air ventilation system (100) of claim 1 or 2, wherein the air outlet (101, 102) is a lateral air outlet (101) or a ceiling air outlet (102).

4. The cabin air ventilation system (100) of one of claims 1 to 3, further comprising:
at least one additional air outlet (101, 102) arranged adjacent to and spaced apart from the air outlet (101, 102), wherein the at least one additional air outlet comprises air stream forming means (108, 110, 111, 112) generating an air stream (161, 162) in the form of a ring segment after leaving the air outlet,
wherein, preferably, the ring segment associated with the air outlet overlaps in part with the ring segment associated with the additional air outlet.

5. An aircraft section (5), comprising:
a plurality of frames (80) arranged in a plane perpendicular to a longitudinal direction of the aircraft section, and regularly spaced apart from one another by a first distance; and
a cabin air ventilation system (100) of claim 4.

6. The aircraft section (5) of claim 5, wherein a second distance between the air outlet and the additional air outlet of the cabin air ventilation system is at least the first distance between two immediately adjacent frames (80) of the plurality of frames.

7. The aircraft section (5) of claim 5 or 6, wherein the at least one additional air outlet comprises a plurality of air outlets (101, 102), and wherein, in the longitudinal direction of the aircraft section (5), all air outlets form a recurring sequence of a lateral air outlet (101) followed by a ceiling air outlet (102).

8. The aircraft section (5) of claim 7, wherein each of all air outlets (100, 102) is coupled to one dedicated riser duct (50).

9. An aircraft (1), comprising:
at least one cabin air ventilation system (100) of one of claims 1 to 4; and/or
at least one aircraft section (5) of one of claims 5 to 8.
